# FASCICULE DE BREVET EUROPEEN

(11) **EP 3 302 874 B1**
(45) Date de publication et mention de la délivrance du brevet: **13.10.2021**
(21) Numéro de dépôt: 16733637.9
(22) Date de dépôt: 26.05.2016
(51) Int. Cl.: B23P 13/04, B23P 15/02, B22F 3/17, B22F 3/20, B21C 23/00, B21C 23/14, B21C 23/16, B21C 35/02, B21K 3/04, B22F 5/04

(54) **PROCÉDÉ DE FABRICATION D'UNE AUBE DE TURBOMACHINE EN TIAL**
VERFAHREN ZUR HERSTELLUNG EINER TIAL-SCHAUFEL EINES TURBINENMOTORS
METHOD FOR MANUFACTURING A TIAL BLADE OF A TURBINE ENGINE

(30) Priorité: 26.05.2015 FR 1554696
(43) Date de publication de la demande: 11.04.2018
(73) Titulaire: Safran Aircraft Engines, 75015 Paris (FR); SAFRAN, 75015 Paris (FR)
(72) Inventeur: LECONTE, Gilbert, 77550 Moissy-Cramayel Cedex (FR); FRANCHET, Jean-Michel, 77550 Moissy-Cramayel Cedex (FR); SALLOT, Pierre, 77550 Moissy-Cramayel Cedex (FR)
(74) Mandataire: Regimbeau
(86) Numéro de dépôt international: PCT/FR2016/051244
(87) Numéro de publication internationale: WO 2016/189254

(56) Documents cités:
- EP-A1- 1 785 502
- EP-A1- 2 335 849
- EP-A1- 2 423 340
- JP-A- 2007 056 340
- RU-C1- 2 254 200
- US-A- 5 411 700

## Description

### DOMAINE DE L'INVENTION

La présente invention concerne le domaine des procédés de fabrication des aubes de turbomachine. La présente invention s'applique de manière particulièrement avantageuse à la fabrication d'aubes de rotor de turbomachine, mais peut également s'appliquer à la fabrication d'aubes de redresseur.

### ETAT DE LA TECHNIQUE

Le document RU-2 254 200 C1 concerne un procédé de fabrication d'une aube de turbomachine, comportant une étape d'extrusion. II décrit en particulier le préambule de la revendication 1.

Le document EP- 2 423 340 B1 concerne un procédé de fabrication d'une aube de turbomachine, comportant une étape de moulage par refusion à l'arc sous double vide, une étape de compression isostatique à chaud d'extrusion, une étape de sectionnement, une étape de traitement thermique et une étape d'usinage.

Le document JP-2007 056340A concerne un procédé de fabrication d'une aube de turbine, comportant une étape de coulage, une étape d'extrusion et une étape de forgeage.

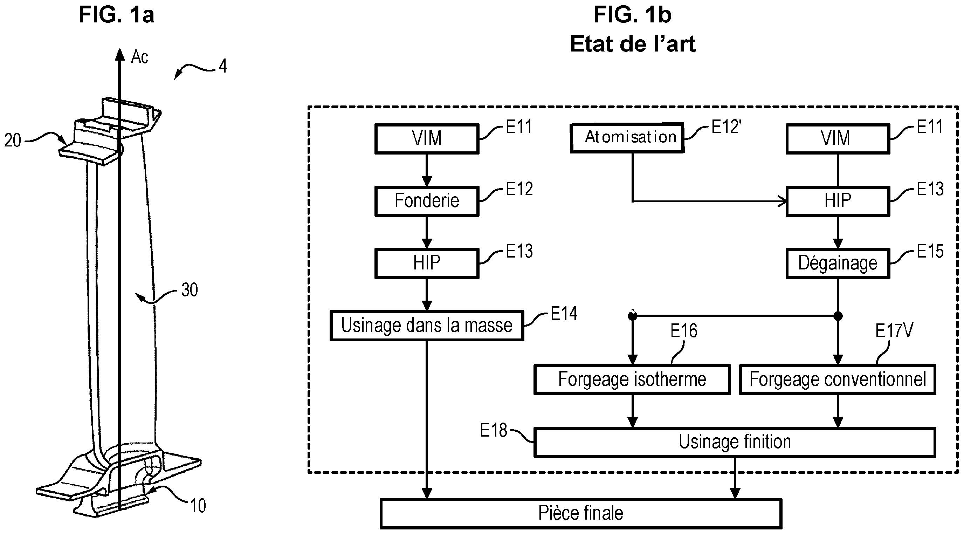

Classiquement, tel qu'illustré à la figure 1a, une aube mobile 4 de turbomachine comprend une pale 30 s'étendant suivant l'axe principal de l'aube, entre les extrémités proximale et distale (i.e. intérieure et extérieure) de l'aube. A son extrémité proximale, l'aube 30 comprend un pied 10 par lequel elle est fixée à la turbomachine, et en particulier à un disque du rotor de la turbomachine dans le cas d'une aube de rotor de turbomachine. A son extrémité distale, ou extrémité libre, l'aube 30 peut comprendre un élément transversal, appelé talon 20. Lorsque plusieurs aubes 30 mobiles sont fixées sur un disque de rotor, leurs talons 20 sont disposés bord à bord de manière à former une couronne circonférentielle qui a, notamment, pour fonction de délimiter extérieurement la veine d'écoulement du gaz traversant la turbomachine et de limiter ainsi les fuites de gaz à cet endroit.

En fonctionnement, la rotation de l'aube mobile 4 de turbomachine génère une force centrifuge orientée dans la direction de l'axe principal de l'aube mobile 4, par la suite appelé axe de chargement Ac. En particulier, le pied 10, qui assure la liaison mécanique entre la pale 30 et le disque du rotor, est le siège d'importantes contraintes mécaniques orientées selon l'axe Ac de chargement de l'aube.

Les aubes mobiles 4 de turbomachine sont classiquement fabriquées en alliage base nickel par fonderie traditionnelle.

Par ailleurs, on connait les alliages intermétalliques à base d'aluminiures de titane, appelés par la suite aluminiures de titane ou TiAI, qui sont des alliages constitués d'aluminiure de titane dans lequel une fraction minoritaire des atomes d'aluminium et de titane peut être remplacée par d'autres atomes, comme le zirconium, le fer, le molybdène, le silicium, ou le niobium.

Les alliages TiAI présentent des propriétés mécaniques spécifiques comparables, jusqu'à 750°C, à celles d'un alliage base nickel de fonderie traditionnelle. Les alliages TiAI présentent, au moins partiellement, une structure en grains lamellaires qui augmente leur résistance mécanique. En outre, le TiAI présente une faible densité, de l'ordre de 4, significativement plus faible que celle des alliages base nickel, qui est de l'ordre de 8. C'est pourquoi, il a été envisagé de fabriquer les aubes de turbomachine en TiAI en remplacement des alliages base nickel, dans l'objectif de réduire la masse des aubes de turbomachine.

Les alliages TiAI ont toutefois plusieurs inconvénients majeurs qui compliquent leur utilisation pour la fabrication d'aubes mobiles de turbomachine. En particulier, ils présentent une fragilité à basse température se traduisant par un faible allongement à rupture, et une tenue à la fissuration réduite.

Par ailleurs, la mise en forme de l'alliage TiAI, pour fabriquer une aube mobile de turbomachine, est très délicate, car la fenêtre de forgeabilité industrielle, à savoir le compromis entre température et vitesse de mise en forme, est très étroite. La coulabilité est aussi problématique car la vitesse de solidification rapide de ces alliages expose la pièce finale à des risques de retassures et des porosités importants.

Comme illustré sur la figure 1b, il a été proposé de fabriquer des aubes mobiles en TiAI par fonderie, un lingot étant formé par coulée de métal liquide (VIM) dans une étape E11, puis mis en forme par fonderie dans une étape E12, suivie par une étape E13 de compression isostatique à chaud (HIP) pour leur conférer de bonnes propriétés, avant d'être usiné dans la masse lors d'une étape E14. La mise en forme de l'alliage TiAI par fonderie est extrêmement difficile en raison de la mauvaise coulabilité de l'alliage TiAI qui ne permet pas de couler des épaisseurs suffisamment fines pour réaliser des pièces à côtes finies, c'est-à-dire ayant la forme de la pièce finale. Il est donc nécessaire d'usiner toute la périphérie du brut de fonderie pour obtenir la pièce finale.

Comme illustré sur la figure 1b, il a également été proposé de fabriquer des aubes mobiles en TiAI par forgeage, un lingot étant formé par coulée de métal liquide (VIM) dans une étape E11 ou par atomisation de poudre dans une étape E12' dans une gaine 7, suivie d'une étape E13 de HIP et une étape E15 de dégainage, puis mis en forme par forgeage conventionnel dans une étape E17. La mise en forme de l'alliage TiAI par forgeage conventionnel E17 en matrices chaudes est également très difficile. En effet, sur l'alliage TiAI, aucune fenêtre de forgeabilité industrielle n'a pu être déterminée, tous les essais ont conduit à la fissuration de la pièce forgée. En outre, le procédé de forgeage conventionnel E17 ne permet pas de forger directement la pièce finale. En effet, d'importantes surépaisseurs subsistant après l'étape de forgeage, il est nécessaire d'effectuer une étape finale d'usinage E 18 pour obtenir la pièce finale. Bien que le forgeage isotherme E16 permette de s'approcher significativement plus des côtes finies, une étape d'usinage E18 importante reste nécessaire. Par ailleurs le forgeage isotherme E16 est peu productif et cher, en raison principalement de la faible durée de vie des matrices.

En outre, dans tous les procédés de l'état de l'art pour mettre en œuvre les alliages TiAI, il est nécessaire d'utiliser une étape de compression isostatique à chaud (HIP) E13 pour leur conférer de bonnes propriétés. Cette étape est couteuse, ne permet pas de donner une forme particulière à la matière et fait intervenir des températures élevées qui ont tendances à faire grossir le grain.

Il existe donc un besoin important pour un procédé de fabrication d'aubes mobiles de turbomachine par mise en forme de l'alliage TiAI, qui ne présente pas ces inconvénients.

### EXPOSE DE L'INVENTION

L'invention propose un procédé de fabrication d'une aube de turbomachine par mise en forme d'un alliage TiAI.

A cet effet l'invention propose un procédé de fabrication d'une aube de turbomachine suivant la revendication 1.

Les revendications 2 à 5 concernent des modes de réalisation du procédé suivant l'invention.

Par « sensiblement perpendiculaire », il peut être considéré une branche latérale légèrement inclinée par rapport à la branche principale, cette inclinaison pouvant être de quelques degrés à une dizaine de degrés voire une trentaine de degrés.

Le filage permet d'affiner la structure des alliages TiAI, afin de réduire la contrainte d'écoulement de l'alliage, à savoir la contrainte nécessaire pour provoquer une déformation plastique de l'alliage. Il est alors possible d'employer, après filage, des moyens de forgeage conventionnels permettant d'obtenir des pièces près des côtes, c'est-à-dire proche de la forme finale et des dimensions finales de l'aube, ce qui était impossible dans les procédés de l'état de l'art. L'invention permet ainsi de limiter les étapes d'usinage ultérieures, ce qui permet par conséquent de gagner du temps et de réduire la quantité de matière perdue.

Le procédé proposé permet de supprimer l'étape de compression isostatique à chaud.

Le filage permet, en même temps, de donner au lingot filé une forme de section transversale présentant une branche principale et au moins une branche latérale sensiblement perpendiculaire à la branche principale, ce qui permet de former le pied de l'aube par forgeage dans la première branche latérale, et le talon, s'il existe, dans la seconde branche latérale. Ainsi, la forme du lingot filé s'approche de celle de la pièce finale, ce qui permet de réduire la déformation nécessaire lors de l'étape finale de forgeage conventionnel.

Enfin, le forgeage de la branche latérale du lingot filé provoque une orientation des lamelles de l'alliage, par l'action du travail de déformation, dans la direction perpendiculaire à l'axe de chargement de l'aube. L'orientation des lamelles de l'alliage dans la direction perpendiculaire à l'axe de chargement de l'aube, permet d'augmenter la résistance de l'aube aux contraintes mécaniques auxquelles elle sera soumise en fonctionnement.

L'utilisation combinée d'un lingot réalisé à partir de poudres et de l'étape de filage du conteneur, de dégainage et de forgeage, permet d'obtenir des barres ayant une microstructure homogène chimiquement et ayant une taille de grains faible. Une fois que le lingot est réalisé par atomisation de poudres, l'étape de filage permet de regrouper en une seule étape la compaction de la poudre, son frittage, sa mise en forme et de conserver une microstructure fine.

Le document US5411700 précise colonne 3 ligne 18 à 27 que la densification n'est que de 95% et que le conteneur est éliminé avant le filage ce que n'est pas le cas dans la présente invention. En effet, le filage des poudres en conteneur permet à la fois la compaction avec une densification à 100%, un affinement de la structure et une mise en forme préalable à un forgeage final dans le cas d'un filage de forme.

En outre, une densification de 95% comme dans le document US5411700 conduira à des criques importantes quelques soient les conditions de forgeage.

L'invention est avantageusement complétée par les caractéristiques suivantes, prises individuellement ou en l'une quelconque de leurs combinaisons techniquement possibles.

L'orifice de la filière présente une unique fente latérale, de manière à obtenir un lingot filé en forme de barre de section présentant une branche principale et une unique branche latérale, la pale de l'aube étant forgée dans la branche principale tandis que le pied de l'aube sera forgé dans la branche latérale.

Alternativement, l'orifice de la filière présente une première fente latérale qui s'étend à partir de l'une extrémité de la fente principale perpendiculairement à celle-ci, et une seconde fente latérale qui s'étend à partir de l'autre extrémité de la fente principale sensiblement perpendiculairement à celle-ci, de manière à obtenir un lingot filé en forme de barre ayant une section présentant une branche principale, une première branche latérale, s'étendant sensiblement perpendiculairement à la branche principale à partir d'une extrémité de celle-ci, et une seconde branche latérale s'étendant sensiblement perpendiculairement à la branche principale à partir de l'autre extrémité de celle-ci. La pale est alors forgée dans la branche principale, le pied de l'aube étant forgé dans la première branche latérale, et le talon dans la seconde branche latérale.

Le forgeage est réalisé à l'air libre, ce qui est moins contraignant que le forgeage isotherme.

Le forgeage est réalisé avec une température d'outillage comprise entre 600° et 950°C, ce qui est moins contraignant que le forgeage isotherme.

Pour l'alliage TiAl 48-2-2 (Ti-48AI-2Cr-2Nb (% atomiques)), lorsque le lingot est obtenu par atomisation des poudres, le procédé de fabrication comporte en outre une étape de gainage du lingot préalablement au filage et une étape de dégainage entre l'étape de filage et l'étape de forgeage.

Le lingot est formé par atomisation de poudre. L'utilisation combinée d'une poudre fine ainsi que du filage permet d'obtenir des barres ayant une microstructure homogène chimiquement et ayant une taille de grains faible. Dans le cas où le lingot est réalisé par atomisation de poudres, l'étape de filage permet de regrouper en une seule étape la compaction de la poudre, son frittage, sa mise en forme et surtout de conserver une microstructure fine, que l'on pourra faire grossir si besoin

Le procédé peut comporter en outre une étape d'usinage après l'étape de forgeage qui permet de finaliser la pièce.

L'aube de turbomachine obtenue par un procédé tel que décrit est caractérisée par le grain de l'alliage qui la constitue.

En effet, le grain de l'alliage constituant une aube de turbomachine obtenue par un procédé tel que décrit est d'une taille de l'ordre de 50 µm, sensiblement plus faible que le grain de l'alliage d'une aube de turbomachine obtenue par un autre procédé.

En outre, une aube de turbomachine obtenue par un procédé tel que décrit se distingue d'une aube de turbomachine obtenue par un autre procédé par le fait que les grains lamellaires de l'alliage sont orientés dans la direction perpendiculaire à l'axe de chargement de l'aube.

### DESCRIPTION DES FIGURES

D'autres objectifs, caractéristiques et avantages sortiront de la description détaillée qui suit en référence aux dessins donnés à titre illustratif et non limitatif parmi lesquels :
- La figure 1a, discutée plus haut, représente une aube mobile de turbomachine.
- La figure 1b, discutée plus haut, présente les différents procédés de mise en forme de l'alliage TiAI de l'art antérieur.
- La figure 2a, illustre la contrainte d'écoulement d'un lingot en alliage 48-2-2, en fonction de la déformation exercée, pour un ligot avant filage (trait en pointillé) et pour un lingot filé (trait plein).
- La figure 2b est une coupe d'un ligot en alliage 48-2-2 avant filage.
- La figure 2c est une coupe d'un ligot en alliage 48-2-2 après filage.
- La figure 3 illustre les différentes étapes du procédé selon l'invention, suivant plusieurs possibilités.
- Les figures 4a à 4f illustrent le premier mode de réalisation du procédé selon l'invention et en particulier,

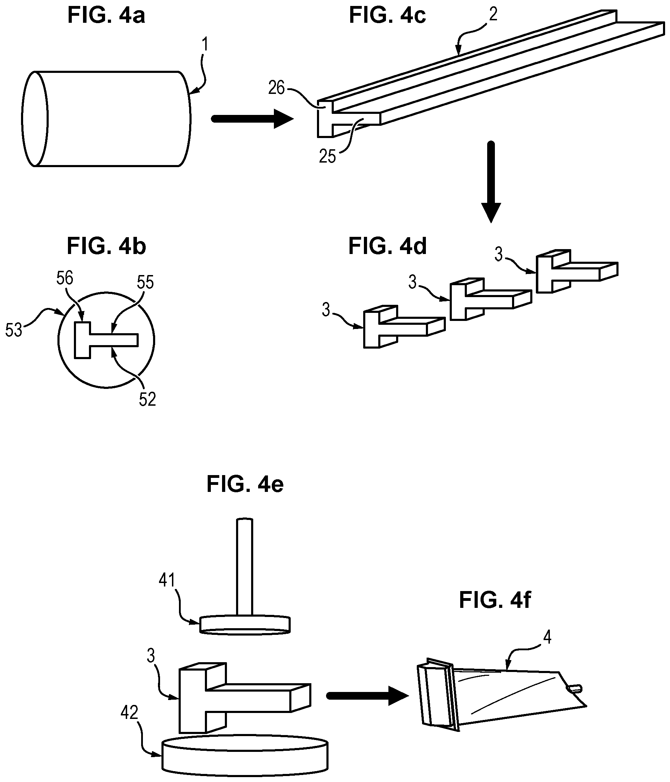

   - la figure 4a représente un lingot avant filage ;
   - la figure 4b représente la filière vue de face ;
   - la figure 4c représente un lingot après filage ;
   - la figure 4d représente un lingot découpé en tronçons ;
   - la figure 4e illustre schématiquement l'étape de forgeage ;
   - la figure 4f représente le tronçon de lingot après l'étape de forgeage.

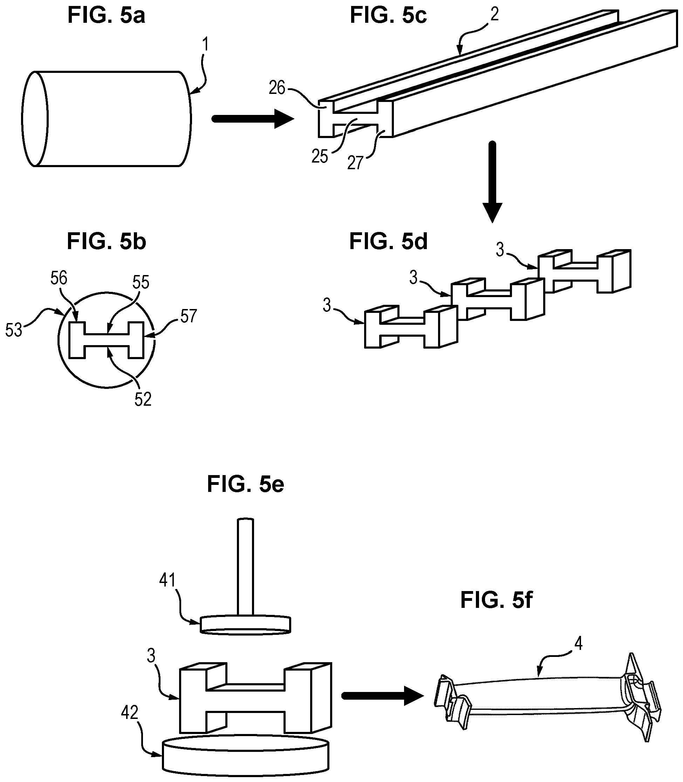

- Les figures 5a à 5e illustrent le second mode de réalisation du procédé selon l'invention. En particulier,
   - la figure 5a représente un lingot avant filage ;
   - la figure 5b représente la filière vue de face ;
   - la figure 5c représente un lingot après filage ;
   - la figure 5d représente un lingot découpé en tronçons ;
   - la figure 5e illustre schématiquement l'étape de forgeage ;
   - la figure 5f représente le tronçon de lingot après l'étape de forgeage.

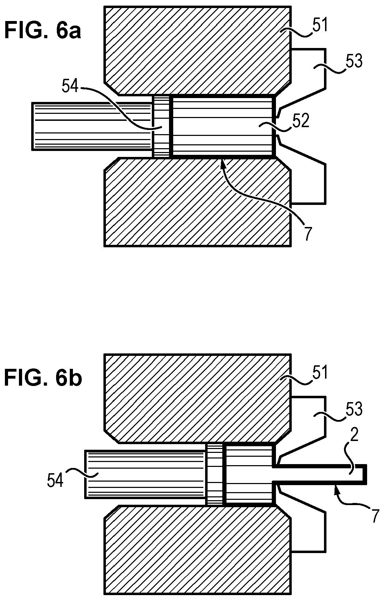

- Les figures 6a et 6b illustrent l'étape de filage, les figures 6a et 6b illustrant un filage avec gaine.

### DESCRIPTION DETAILLEE DE L'INVENTION

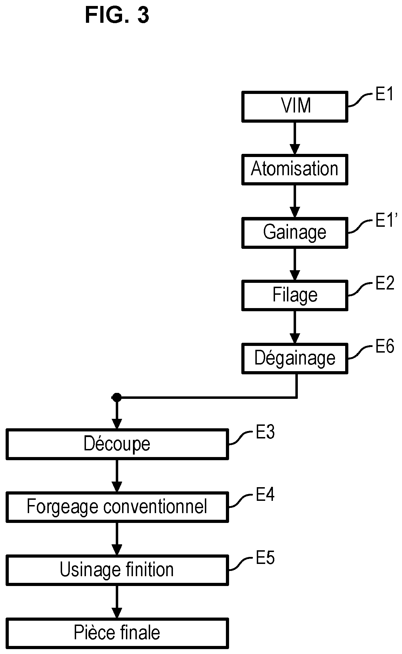

Comme illustré sur la figure 3, le procédé de fabrication d'une aube de turbomachine, comporte des étapes de :
- E1 formation d'un lingot 1 d'aluminiure de titane;
- E2 filage du lingot 1;
- E3 découpe transversale du lingot filé 2 de manière à obtenir des tronçons 3 de lingot filé ;
- E4 forgeage des tronçons 3 de lingot filé de manière à obtenir une aube de turbomachine 4.

### Formation d'un lingot 1

L'étape E1 consiste à former un lingot 1 en aluminiure de titane.

Le procédé peut être appliqué à tout type d'aluminiures de titane.

En particulier, le procédé peut être appliqué à l'alliage Ti-48Al-2Cr-2Nb (% atomiques)), par la suite noté TiAI 48-2-2. Il constitue un compromis acceptable en termes de propriétés mécaniques.

En particulier, le procédé peut être appliqué à des alliages dit beta de type représenté par la formule Ti-Al(a)Nb(b)Mo(c)B(d) dans laquelle 'a', 'b', 'c' et 'd' sont exprimés en pourcentage atomique, 'a' variant entre environ 44 et environ 48, 'b' variant entre environ 2 et environ 6, 'c' variant entre environ 0 et environ 2 et 'd' variant entre environ 0,01 et environ 1,0. Ces alliages présentent une résistance et une dureté excellentes.

Le procédé peut également être appliqué à des alliages de type représenté par la formule Ti-Al-Cr-Nb-Si-Fe-Mo-Zr , comme par exemple un alliage contenant en atomes 44 à 49 % d'aluminium, 0,5 à 3 % de zirconium, 0,5 à 2 % de fer, 0,5 à 2 % de molybdène, 0,2 à 0,5 % de silicium, 0 à 3 % de niobium, le complément à 100% du titane et des impuretés inévitables.

Le lingot est typiquement élaboré par coulée de métal liquide (procédé couramment appelé VIM pour 'Vacuun Induction Melting'). Lors de la coulée de métal liquide les différents constituants destinés à former l'alliage sont fusionnés par chauffage, puis le bain de matière métallique en fusion est coulé dans une enceinte sous vide. Le lingot 1 est typiquement de forme cylindrique de section circulaire. A cet effet, l'enceinte est de forme cylindrique creuse.

Dans le cas où le lingot est réalisé par coulée dans une enceinte sous vide, la structure obtenue est une structure de solidification relativement hétérogène et avec une taille de grain de coulée très importante (de l'ordre de 300-500 µm). Dans ce cas, le filage va homogénéiser et affiner la structure grossière de grain de départ, jusqu'à obtenir taille de grains faible de l'ordre de 50 µm.

Les alliages de type beta ont tendance à ségréger chimiquement lors de leur élaboration. Le filage permet d'agir sur la taille des grains mais n'a pas d'impact sur l'homogénéité chimique de l'alliage. C'est pourquoi pour ces derniers, il peut être intéressant de partir de poudres afin de constituer un demi-produit, avant forgeage, plus homogène chimiquement. A cet effet, la coulée de métal liquide est suivie d'une atomisation de poudre. Ce procédé consiste à atomiser un filet de matière obtenu à partir du bain de matière métallique en fusion. Les gouttelettes de matière se solidifient dans une chambre d'atomisation grâce à un échange convectif avec le gaz ambiant, typiquement de l'argon, et donnent de la poudre. Celle-ci est collectée à la sortie des gaz d'atomisation et placée dans une gaine 7, qui peut être usinée dans un matériau différent de celui de la poudre comme par exemple l'inox. La gaine 7 est typiquement de forme cylindrique creuse. L'utilisation de la métallurgie des poudres permet de remédier aux difficultés d'homogénéisation des alliages ségrégeants. Toutes les opérations de manipulation de la poudre, de remplissage de la gaine ainsi que son sellage doivent être réalisées sous atmosphère neutre ou sous vide de manière à limiter la contamination de cette dernière par l'oxygène. L'utilisation combinée d'une poudre fine ainsi que du filage permet d'obtenir des barres ayant une microstructure homogène chimiquement et ayant une taille de grains faible. Une fois que le lingot est réalisé par atomisation de poudres, l'étape de filage permet de regrouper en une seule étape la compaction de la poudre, son frittage, sa mise en forme et surtout de conserver une microstructure fine, que l'on pourra faire grossir si besoin

### Filage du lingot 1

Lors de l'étape E2, le lingot subit une mise en forme par filage. Le filage permet la mise en forme du lingot par compression. Le lingot mis en forme par filage est appelé lingot filé 2. L'étape E2 consiste à faire passer le lingot (éventuellement rendu ductile par chauffage à la température dite de filage) par un orifice 52 d'une filière 53, comme illustré sur les figures 6a, et 6b. Comme illustré sur la figure 6a, le lingot 1, généralement placé dans un conteneur 51, est poussé dans la filière 53 au moyen d'une presse 54, typiquement une presse hydraulique, une pompe ou d'une vis d'extrudeuse, de manière à le faire ressortir par l'orifice 52 en exerçant une poussée. À partir d'un certain effort exercé par la presse 54, il y a écoulement plastique du lingot à travers l'orifice 52 de la filière 53, comme illustré sur la figure 6b. Le lingot filé 2 est donc de forme avec une section transversale correspondant à la forme de l'orifice 52.

Le filage permet d'homogénéiser et d'affiner très fortement la structure de l'alliage et par conséquent de réduire la contrainte d'écoulement, à savoir la contrainte nécessaire pour provoquer une déformation plastique de l'alliage.

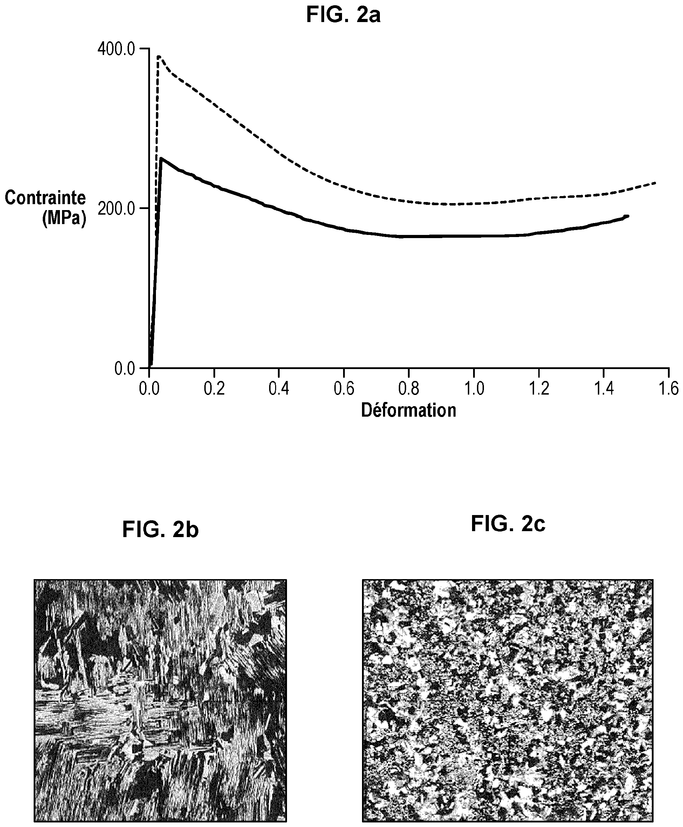

Comme on peut le voir sur la figure 2b, qui est une coupe d'un lingot en alliage 48-2-2 avant filage, et la figure 2c, qui est une coupe d'un ligot en alliage 48-2-2 après filage, le filage permet d'affiner la structure de l'alliage, c'est-à-dire de réduire la taille de grains de l'alliage. Les résultats des inventeurs, illustrés sur la figure 2a, montrent que l'étape de filage permet de réduire de 30 à 40% la contrainte d'écoulement de l'alliage 48-2-2. Les inventeurs ont obtenus des résultats similaires avec d'autres alliages TiAI et notamment avec un alliage Ti-45Al-2.4Si.

Le filage permet, en même temps, de donner au lingot filé de forme dont la section est définie par la forme de l'orifice 52 de la filière 53. La forme de l'orifice 52 de la filière 53 est choisie de manière à ce que la forme du lingot filé s'approche de celle de la pièce finale, ce qui permet de réduire la déformation nécessaire lors de l'étape finale de forgeage conventionnel. Il est alors possible d'obtenir par forgeage conventionnel une pièce proche de la forme de la pièce finale, et ainsi de limiter l'étape d'usinage finale.

A cet effet, le lingot 1 est filé dans une filière dont l'orifice 52 présente une fente principale 55 et au moins une fente latérale 56. La fente latérale 56 s'étend perpendiculairement à la fente principale 55, à partir de l'une des extrémités de celle-ci, et de part et d'autre de celle-ci, comme illustré sur les figures 4b et 5b. On obtient ainsi un lingot filé 2 ayant la forme d'une barre de section transversale présentant une branche principale 25 et au moins une branche latérale 26 perpendiculaire à la branche principale 25, comme illustré sur les figures 4c et 5c.

Ici, la branche latérale est sensiblement perpendiculaire à la fente principale. Cependant il peut être considéré une branche latérale légèrement inclinée par rapport à la branche principale, cette inclinaison pouvant être de quelques degrés à une dizaine de degrés voire une trentaine de degrés.

Dans un premier mode de réalisation illustré par les figures 4a à 4f, l'orifice 52 de la filière 53 présente une fente principale 55 et une seule fente latérale 56 qui s'étend à partir de l'une des extrémités de la fente principale 55 perpendiculairement à celle-ci, comme illustré sur la figure 4b. Autrement dit, l'orifice 52 de la filière 53 a une forme de T. Le lingot est filé de manière à obtenir un lingot filé 2 en forme de barre de section en forme de T, présentant une branche principale 25 et une branche latérale 26 perpendiculaire à la branche principale 25, comme illustré sur la figure 4c. La pale 30 sera forgée dans la branche principale 25 tandis que le pied 10 de l'aube sera forgé dans la branche latérale 26.

Dans un second mode de réalisation illustré par les figures 5a à 5f, l'orifice 52 de la filière 53 présente une fente principale 55, une première fente latérale 56 qui s'étend à partir de l'une extrémité de la fente principale 55 perpendiculairement à celle-ci, et une seconde fente latérale 57 qui s'étend à partir de l'autre extrémité de la fente principale 55 perpendiculairement à celle-ci, comme illustré sur la figure 5b. Autrement dit, l'orifice 52 de la filière 53 a une section en forme de H. Le lingot est filé de manière à obtenir un lingot filé 2 en forme de barre ayant une section en forme de H, présentant une branche principale 25, une première branche latérale 26, s'étendant perpendiculairement à la branche principale 25 à partir d'une extrémité de celle-ci, et une seconde branche latérale 27 s'étendant perpendiculairement à la branche principale 25 à partir de l'autre extrémité de celle-ci, comme illustré sur la figure 5c. Comme dans le premier mode de réalisation, la pale 30 sera forgée dans la branche principale 25 tandis que le pied 10 de l'aube sera forgé dans la première branche latérale 26. En outre, le talon 20 de l'aube sera forgé dans la seconde branche latérale 26.

Pour l'alliage TiAl 48-2-2, le filage est une étape relativement délicate. Des essais de filage sans gaine de lingots formés par coulée montrent souvent des criques profondes dans certaines zones de la barre. Dans ce cas, le lingot 1 est avantageusement enrobé d'une gaine 7, par exemple en inox, lors d'une étape de gainage E1', afin de réduire le refroidissement pariétal du lingot lors du filage et éviter ainsi une déformation à une température localement trop basse qui peut entrainer des criques. Le lingot 1 enrobé de sa gaine 7 est porté à la température de filage avant passage dans la filière 53 au travers d'un pot de filage 51. Après filage, il faut prévoir une étape de dégainage E6 du lingot filé 2 qui consiste à éliminer la gaine, par exemple par tournage, avant forgeage. Il peut également être avantageux d'éliminer le matériau de gainage par enlèvement chimique.

Par contre, pour les alliages de type beta, moins chargés en Al mais plus chargés en Nb et Mo, leur conférant une meilleure forgeabilité que le 48-2-2, le filage peut être réalisé sans gaine (pas selon les revendications).

### Post-traitement thermique

En fonction des propriétés mécaniques recherchées pour la fonctionnalité de la pièce finale, un traitement thermique classique peut être nécessaire pour régénérer une microstructure contrôlée. En effet, les structures après forgeage seront fines voire très fines. Certaines propriétés telles que le fluage, ne seront pas optimales après forgeage.

### Découpe du lingot filé en tronçon

Lors de l'étape E3, le lingot est découpé en tronçon. A cet effet, le lingot est découpé selon des plans transversaux par des technique classique de découpe des métaux telles que la découpe au jet d'eau, la découpe laser, ou la découpe au fil.

### Forgeage

Comme expliqué plus haut, le filage permet, préalablement au forgeage, d'affiner la structure des alliages TiAl, afin de réduire la contrainte d'écoulement de l'alliage, à savoir la contrainte nécessaire pour provoquer une déformation plastique de l'alliage. Il est alors possible d'employer, après filage, des moyens de forgeage conventionnels permettant d'obtenir une pièce proche de la forme finale de l'aube, ce qui n'était pas possible dans l'art antérieur. Par forgeage conventionnel, on entend forgeage à l'air libre et à matrice chaude par opposition au forgeage isotherme.

Le forgeage consiste à appliquer une force importante sur le lingot filé 2 afin de la contraindre à épouser la forme de la pièce final, à savoir l'aube de turbomachine.

Le forgeage est effectué en appliquant une force importante sur le lingot filé 2 à l'aide d'un dispositif de frappe 41, tel qu'une matrice déplacée hydrauliquement à une vitesse contrôlée, et d'un support 42, tel qu'une enclume ou une matrice fixe, comme illustré sur les figures 4e, et 5e.

Le lingot filé 2 ayant une forme de section transversale présentant une branche principale 25 et au moins une branche latérale 26 perpendiculaire à la branche principale 25, la pale 30 de l'aube est forgée dans la branche principale 25, et le pied 10 de l'aube est formé par forgeage dans la branche latérale 26. Si la section transversale du lingot filé présente deux branches latérales 25 et 27, le pied 10 de l'aube sera formé par forgeage dans l'une des branches latérales 25, et le talon 20 dans l'autre branche latérale 26. Ainsi, la forme du lingot filé 2 s'approche de celle de la pièce finale 4, ce qui permet de réduire la déformation nécessaire lors de l'étape de forgeage.

Les aubes 4 obtenues par forgeage sont plus résistantes aux contraintes mécaniques car la déformation des métaux engendre un grand nombre de phénomènes métallurgiques, tant au niveau microscopique que macroscopique.

Notamment, le filage provoque de par la forme du lingot filé, une orientation des grains lamellaires de l'alliage, par l'action du travail de déformation, dans la direction perpendiculaire à l'axe de chargement de l'aube. L'orientation des grains lamellaires de l'alliage dans la direction perpendiculaire à l'axe de chargement de l'aube, permet d'augmenter la résistance de l'aube aux contraintes mécanique auxquelles elle sera soumise en fonctionnement.

Le forgeage n'a pas besoin d'être isotherme (le forgeage isotherme nécessite que les outillages soient portés aux températures de chauffage du métal qui sera forgé à savoir plus de 1000°) et peut être effectué à l'air libre en matrices chaudes avec une température d'outillage typiquement comprise entre 600° et 950°C.

## Revendications

1. Procédé de fabrication d'une aube de turbomachine (4), en aluminiure de titane, comportant une étape de :
- (E1) formation d'un lingot (1) en aluminiure de titane ;
- (E2) filage du lingot (1) à travers un orifice (52) d'une filière (53), l'orifice (52) présentant une fente principale (55) et au moins une fente latérale (56) qui s'étend à partir de l'une des extrémités de la fente principale (55) sensiblement perpendiculairement à celle-ci, de manière à obtenir un lingot filé (2) ayant la forme d'une barre de section transversale présentant une branche principale (25) et au moins une branche latérale (26) sensiblement perpendiculaire à la branche principale (25) ;
- (E3) découpe transversale du lingot filé (2) de manière à obtenir des tronçons (3) de lingot filé ;
- (E4) forgeage de chaque tronçon (3) de lingot filé de manière à obtenir une aube de turbomachine (4),
le procédé de fabrication étant **caractérisé en ce que** le forgeage est réalisé en matrices chaudes avec une température comprise entre 600° et 950°C,
**en ce que** le lingot (1) est formé par atomisation de poudre,
et **en ce que** le procédé de fabrication comporte en outre une étape de gainage (E1') du lingot (1) préalablement au filage (E2) et une étape de dégainage (E6) entre l'étape de filage (E2) et l'étape de forgeage (E4).

2. Procédé de fabrication d'une aube de turbomachine (4), selon la revendication 1, dans lequel l'orifice (52) de la filière (53) présente une unique fente latérale (56) qui s'étend à partir de l'une des extrémités de la fente principale (55) perpendiculairement à celle-ci, de manière à obtenir un lingot filé (2) en forme de barre de section présentant une branche principale (25) et une unique branche latérale (26) qui s'étend à partir de l'une des extrémités de la branche principale (25) perpendiculairement à celle-ci.

3. Procédé de fabrication d'une aube de turbomachine (4), selon la revendication 1, dans lequel l'orifice (52) de la filière (53) présente une première fente latérale (56) qui s'étend à partir de l'une extrémité de la fente principale (55) sensiblement perpendiculairement à celle-ci, et une seconde fente latérale (57) qui s'étend à partir de l'autre extrémité de la fente principale (55) sensiblement perpendiculairement à celle-ci, de manière à obtenir un lingot filé (2) en forme de barre ayant une section présentant une branche principale (25), une première branche latérale (26), s'étendant sensiblement perpendiculairement à la branche principale (25) à partir d'une extrémité de celle-ci, et une seconde branche latérale (27) s'étendant sensiblement perpendiculairement à la branche principale (25) à partir de l'autre extrémité de celle-ci.

4. Procédé de fabrication d'une aube de turbomachine (4), selon l'une des revendications précédentes, le forgeage étant réalisé à l'air libre.

5. Procédé de fabrication d'une aube de turbomachine (4), selon l'une des revendications précédentes, comportant en outre une étape d'usinage après l'étape de forgeage.

## Patentansprüche

1. Verfahren zur Herstellung einer Turbinenmotorschaufel (4) aus Titanaluminid, das einen Schritt umfasst zur:
- (E1) Bildung eines Blocks (1) aus Titanaluminid;
- (E2) Strangpressen des Blocks (1) durch eine Öffnung (52) einer Düse (53), wobei die Öffnung (52) einen Hauptschlitz (55) und mindestens einen seitlichen Schlitz (56) umfasst, der sich ausgehend von einem der Enden des Hauptschlitzes (55) im Wesentlichen senkrecht dazu erstreckt, derart, dass ein stranggepresster Block (2) erhalten wird, der die Form eines Strangs mit einem Querschnitt aufweist, der einen Hauptabschnitt (25) und mindestens einen seitlichen Abschnitt (26) umfasst, der im Wesentlichen senkrecht zum Hauptabschnitt (25) ist;
- (E3) Querschneiden des stranggepressten Blocks (2) derart, dass Teilabschnitte (3) des stranggepressten Blocks erhalten werden;
- (E4) Schmieden jedes Teilabschnitts (3) des stranggepressten Blocks derart, dass eine Turbinenmotorschaufel (4) erhalten wird,
wobei das Herstellungsverfahren **dadurch gekennzeichnet ist, dass** das Schmieden in heißen Matrizen mit einer Temperatur von zwischen 600C° und 950C° ausgeführt wird,
dadurch, dass der Block (1) durch Pulverzerstäubung gebildet wird,
und dadurch, dass das Herstellungsverfahren ferner einen Schritt zum Umhüllen (E1') des Blocks (1) vor dem Strangpressen (E2) und einen Schritt zum Enthüllen (E6) zwischen dem Schritt zum Strangpressen (E2) und dem Schritt zum Schmieden (E4) umfasst.

2. Verfahren zur Herstellung einer Turbinenmotorschaufel (4) nach Anspruch 1, wobei die Öffnung (52) der Düse (53) einen einzigen seitlichen Schlitz (56) aufweist, der sich ausgehend von einem der Enden des Hauptschlitzes (55) senkrecht dazu erstreckt, derart dass ein stranggepresster Block (2) in der Form eines Strangs mit einem Querschnitt erhalten wird, der einen Hauptabschnitt (25) und einen einzigen seitlichen Abschnitt (26) aufweist, der sich ausgehend von einem der Enden des Hauptabschnitts (25) senkrecht dazu erstreckt.

3. Verfahren zur Herstellung einer Turbinenmotorschaufel (4) nach Anspruch 1, wobei die Öffnung (52) der Düse (53) einen ersten seitlichen Schlitz (56), der sich ausgehend von einen Ende des Hauptschlitzes (55) im Wesentlichen senkrecht dazu erstreckt, und einen zweiten seitlichen Schlitz (57) aufweist, der sich ausgehend von dem anderen Ende des Hauptschlitzes (55) im Wesentlichen senkrecht dazu erstreckt, derart dass ein stranggepresster Block (2) in der Form eines Strangs erhalten wird, der einen Querschnitt aufweist, der einen Hauptabschnitt (25), einen ersten seitlichen Abschnitt (26), der sich im Wesentlichen senkrecht zu dem Hauptabschnitt (25) ausgehend von einem Ende davon erstreckt, und einen zweiten seitlichen Abschnitt (27) aufweist, der sich im Wesentlichen senkrecht zu dem Hauptabschnitt (25) ausgehend von dem anderen Ende davon erstreckt.

4. Verfahren zur Herstellung einer Turbinenmotorschaufel (4) nach einem der vorhergehenden Ansprüche, wobei das Schmieden in freier Luft ausgeführt wird.

5. Verfahren zur Herstellung einer Turbinenmotorschaufel (4) nach einem der vorhergehenden Ansprüche, das ferner einen Schritt zur Bearbeitung nach dem Schritt zum Schmieden umfasst.

## Claims

1. A method for manufacturing a turbine engine blade (4), made of titanium aluminide, including a step of:
- (E1) formation of a titanium aluminide ingot (1);
- (E2) extrusion of the ingot (1) through an opening (52) of a die (53), the opening (52) having a main slot (55) and at least one side slot (56) which extends from one of the ends of the main slot (55) substantially perpendicular to it, so as to obtain an extruded ingot (2) having the shape of a bar with a cross-section having a main branch (25) and at least one side branch (26) substantially perpendicular to the main branch (26);
- (E3) transverse cutting of the extruded ingot (2) so as to obtain sections (3) of extruded ingot;
- (E4) forging of each section (3) of extruded ingot so as to obtain a turbine engine blade (4),
the manufacturing method being **characterized in that** forging is carried out in hot dies with a temperature comprised between 600° and 950°C,
**in that** the ingot (1) is formed by powder spraying,
and **in that** the manufacturing method further includes a cladding step (E1') of the ingot (1) prior to extrusion (E2) and a stripping step (E6) between the extrusion step (E2) and the forging step (E4).

2. The method for manufacturing a turbine engine blade (4) according to claim 1, wherein the opening (52) of the die (53) has a single side slot (56) which extends from one of the ends of the main slot (55), perpendicular to it, so as to obtain an extruded ingot (2) in the form of a bar with a section having a main branch (25) and a single side branch (26) which extends from one of the ends of the main branch (25), perpendicular to it.

3. The method for manufacturing a turbine engine blade (4) according to claim 1, wherein the opening (52) of the die (53) has a first side slot (56) which extends from one end of the main slot (55), substantially perpendicular to it, and a second side slot (57) which extends from the other end of the main slot (55) substantially perpendicular to it, so as to obtain an extruded ingot (2) in the form of a bar having a section having a main branch (25), a first side branch (26) extending substantially perpendicular to the main branch (25) from one end thereof, and a second side branch (27) extending substantially perpendicular to the main branch (25) from the other end thereof.

4. The method for manufacturing a turbine engine blade (4) according to one of the preceding claims, forging being carried out in the open air.

5. The method for manufacturing a turbine engine blade (4) according to one of the preceding claims, further including a machining step after the forging step.
